# EUROPEAN PATENT SPECIFICATION

(11) **EP 1 944 475 B1**
(45) Date of publication and mention of the grant of the patent: **12.08.2015**
(21) Application number: 08250063.8
(22) Date of filing: 08.01.2008
(51) Int. Cl.: F01D 25/18, F02C 7/14

(54) **Heat exchange system**
Wärmeaustauschsystem
Système d'échange de chaleur

(30) Priority: 08.01.2007 US 650825
(43) Date of publication of application: 16.07.2008
(73) Proprietor: United Technologies Corporation, Hartford, CT 06101 (US)
(72) Inventor: Schwarz, Frederick M., Glastonbury, CT 06033 (US); Glahn, Jorn A., Manchester, CT 06042 (US)
(74) Representative: Leckey, David Herbert

(56) References cited:
- EP-A1- 1 018 468
- EP-A2- 1 669 551
- EP-A2- 1 876 328
- WO-A1-92/11451
- CA-A1- 2 226 424
- DE-B- 1 019 866
- GB-A- 750 200

## Description

### BACKGROUND OF THE INVENTION

The present invention relates to lubrication systems for turbine engines and for associated equipment, and more particularly, to air and lubricant heat exchangers for use in maintaining desired temperatures of the lubricants in such engines and equipment.

Lubrication systems for turbine engines, such as a turbofan engine, and for associated equipment, such as an integrated drive generator, provide pressurized lubricant, an oil, to lubricate, cool and clean the engine main bearings, gear box gears, and the like, and again for the lubrication of bearings and other parts in equipment associated with such turbine engines. During such lubrications, heating of the lubricant is caused to occur due to mechanical energy losses in the lubricated apparatus. Thermal management of such lubricants is very important for continued successful operation of such lubrication systems in the apparatus lubricated thereby.

The amount of heat necessary to be ejected from lubricants in such systems is increasing because of the use of larger electrical generators, for instance, in aircraft turbine engines due to increasing consumption of electrical power in the aircraft powered thereby, and because of the advances in aircraft turbine engines such as the use of geared turbofans for such aircraft with large fan-drive gearboxes. Despite the added heat generated by such modified and expanded equipment, the necessary lubricating oil operating temperature ranges to provide satisfactory lubricating performance have not changed for the most part and, in some instances, the upper operating temperature limits have been reduced.

The lubrication system for a turbofan engine in an aircraft typically has a first heat exchanger having passageways through which lubricating oil passes to be cooled by the fuel stream flowing past and around these passageways. This arrangement permits the lubricating oil to reject heat therein to the fuel in the aircraft thereby heating that fuel to help recover some of the energy lost in the combustor of the engine. Because in some flight situations more heat is generated in the lubricating oil than can be accepted for warming the fuel, a portion of the lubricating oil can be forced to bypass the heat exchanger for the fuel and the lubricating oil, and the oil can be directed to a further heat exchanger where the heat therein is transferred to the air in the secondary airstream provided by the fan of the turbofan engine. In a typical arrangement, a duct is provided in the fan cowling through which a portion of the airstream is diverted, and the air and lubricating oil heat exchanger is placed in this duct so that the lubricating oil passing through passageways in that heat exchanger is cooled by the duct airstream flowing past these passageways in the exchanger. If such additional cooling of the oil is not needed in a flight situation, the lubricating oil can again be forced to bypass this air and lubricating oil heat exchanger.

EP-1876328-A discloses a heat exchange system in a turbofan engine. CA-2226424 discloses an aircraft gas turbine engine with a liquid-air heat exchanger. GB-750,200 discloses improvements related to ducted-fan, turbojet engines.

However, the fan airstream that is diverted to pass through the lubricating oil and air heat exchanger in such duct systems flows at least in part through that exchanger, and the exchanger should be large enough, insofar as assuring that a sufficient part of the cooling engine fan airstream flows over a sufficient amount of lubricating oil flowing in passageways therein, to provide adequate oil cooling for the most extreme flight conditions encountered. Larger heat exchangers require larger cross sectional area ducts, and such an air and lubricating oil heat exchanger duct based system continually leads to thrust losses in the turbofan engine. Hence, there is a strong desire for an air and lubricating oil heat exchanger duct based system that reduces such thrust losses and also reduces the volume required therefor in the more compact spaces in advanced turbofan engines.

### BRIEF SUMMARY OF THE INVENTION

The present invention provides in one aspect a turbofan engine heat exchange system for use in lubrication systems of turbofan engine equipment as claimed in claim 1. In another aspect, there is provided a method for cooling lubricating oil as claimed in claim 11.

### BRIEF DESCRIPTION OF THE DRAWINGS

Figure 1 shows a cross sectional top view representation of a turbofan engine fan duct lower bifurcation structure embodying the present invention,
Figure 2 shows a side view partially cut away of a turbofan engine and a further representation of the turbofan engine fan duct lower bifurcation structure of Figure 1, not in accordance with the present invention,
Figure 3 shows a side view partially cut away of a turbofan engine and a further representation of the turbofan engine fan duct lower bifurcation structure of Figure 1, not in accordance with the present invention,
Figure 4 shows a side view partially cut away of a turbofan engine and a further representation of the turbofan engine fan duct lower bifurcation structure of Figure 1, not in accordance with the present invention,
Figure 5 shows a side view partially cut away of a turbofan engine and a representation of the turbofan engine fan duct cowling structure embodying the present invention, and
Figure 6 shows a side view partially cut away of a turbofan engine and another representation of the turbofan engine fan duct cowling structure embodying an alternative version of the present invention.

### DETAILED DESCRIPTION

A smaller cross sectional area heat exchanger leads to enabling its use in a duct of a smaller cross sectional area to thereby improve the compactness of the resulting cooling subsystem. Achieving the same cooling of a working fluid, such as a lubricant, passing through such a smaller cross sectional area heat exchanger generally requires that a larger volume of air pass through that heat exchanger per unit time about the passageways thereof to which the working fluid is delivered and through which the previously heated working fluid is flowing to be cooled. The working fluid cooled in those passageways is thereafter subsequently be introduced to the remainder of the system making use of that fluid. Such an increase in volume rate of air passing through the heat exchanger in a smaller cross sectional area duct generally requires that the pressure gradient from the duct entrance to the duct exit be sufficiently greater to result in such a flow. Although the present invention is useable with any working fluid provided in connection with a gas turbine engine that needs cooling, the remainder of the specification will describe an embodiment in which the working fluid is a lubricant.

A relatively large pressure gradient exists in a turbofan engine between the beginning of the fan stream in the turbofan engine and the ambient atmosphere. Thus, locating the duct in the engine nacelle lower bifurcation, or in some other engine nacelle bifurcation or in the engine core or outer cowlings, to extend from an upstream side near the engine fan to a downstream side at about the end or past the end of the engine fan stream nozzle can provide a significantly greater airflow through that duct to thereby allow reducing the duct cross sectional area and that of the air and lubricant heat exchanger contained therein.

In addition, if the temperature of the engine fuel from its source is low enough to allow the fuel to absorb sufficient heat from the lubricant in the fuel and lubricant heat exchanger in the engine fuel system, the air and lubricant heat exchanger may not be needed, or may not be needed to its full cooling capacity. This situation allows the air flow through the duct to be reduced by providing a duct exit flap that can be controlled to provide the desired cross sectional area for the duct exit, an area that can be kept to the allowable area needed for sufficient lubricant cooling to thereby increase the thrust produced by the escaping air at the duct exit. Often, a duct entrance flap is also provided, typically allowing a duct entrance cross sectional area that is half again as large as the duct exit cross sectional area being then currently provided by the duct exit flap, but which closes the duct entrance if the duct exit flap has closed the duct exit to thereby reduce the drag due to the duct. These two flaps can be commonly controlled insofar as setting the corresponding duct cross sectional openings by using a single flap actuator operating a proportional linkage joining the two flaps, by an actuator for each of these flaps operated by a common actuator controller (not shown) or by any other means that can effect movement of either one of the flaps or both of the flaps.

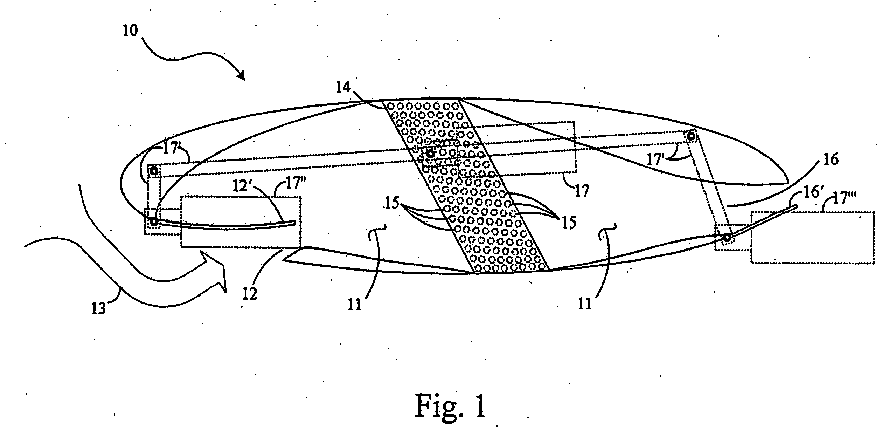

Thus, in Figure 1, and not in accordance with the invention, there is shown a top view of a fan duct lower bifurcation structure, 10, having an airstream cooling duct, 11, beginning upstream at a duct inlet, 12, and extending from there in this structure over a portion of its length downstream to an exit location to extend through a portion of the interior of bifurcation structure 10. An airstream, 13, from a portion of the turbofan engine fan airstream, or fan stream, enters duct 11 at inlet 12 controlled by a duct entrance flap, 12', to pass through a heat exchanger, 14, that uses airstream 13 to cool lubricating oil in the engine lubrication system forced under pressure through a plurality of oil carrying tubes, 15, that are suitably connected into the lubrication system by being connected at one end to an input conduit and at the opposite end to an output conduit so as to allow lubricant oil therein to flow through these tubes. Airstream 13 flows about, and then past, those tubes to reach an exit, 16, of duct 11 at its downstream end which has an exit cross sectional area that is controlled in magnitude by an exit flap, 16'.

Entrance flap 12' can be selectively rotated forcibly inward or outward from the position thereof shown in Figure 1, and exit flap 16' can be selectively rotated forcibly inward or outward from the position thereof shown in that figure, by angle positioning motor, 17, causing a proportional linkage arrangement, 17' to correspondingly move these flaps, and the linkage components, about pins shown in bold dark circles and about the shaft coupled to that motor. Alternatively, entrance flap 12' can be so selectively rotated, and exit flap 16' can be so selectively rotated, by a corresponding one a pair of angle positioning motors, 17" and 17"', directly coupled thereto by corresponding shafts. In turbofan engines that have the airstreams in the fan duct of a sufficiently small Mach number, flap 12' may be omitted.

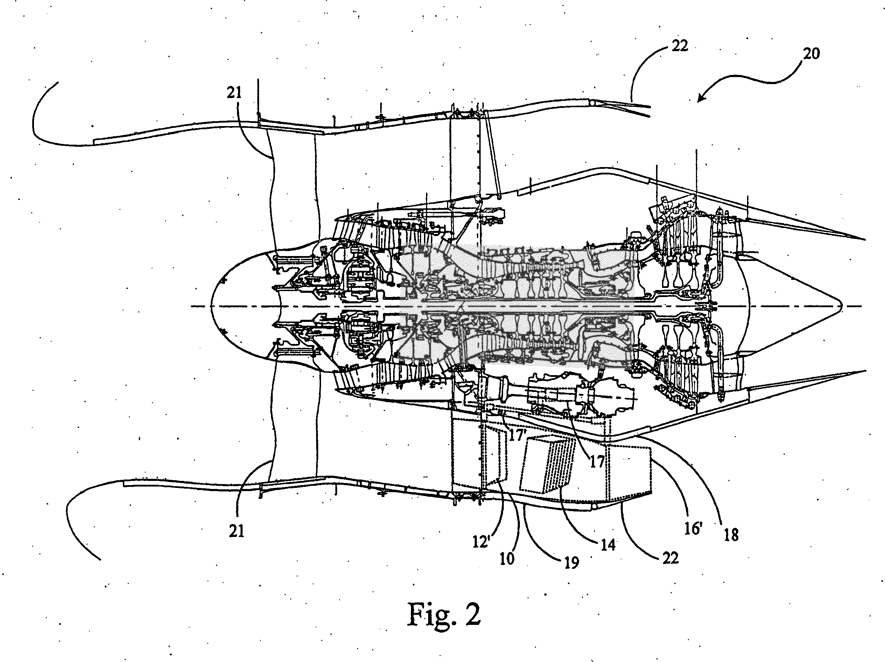

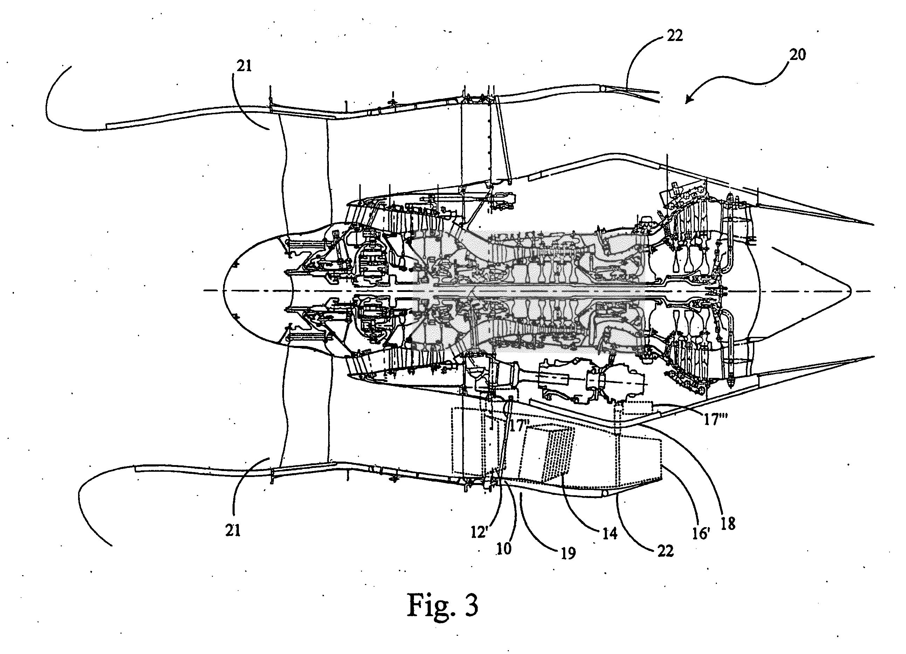

Bifurcation structure 10 is positioned between the bottom of the wall of an engine core cowling, 18, and the bottom of the wall of an outer cowling, 19, of the engine pod for a turbofan engine, 20, as indicated in the partially cut away views shown in Figures 2 and 3 in which only a portion of outer cowling 19 is shown. Shown in turbofan engine 20 among other components is the fan, 21, and the fan duct nozzle, 22, with the fan duct extending therebetween. Figure 2 provides a representation of fan duct lower bifurcation structure 10 including airstream duct 11 with flaps 12' and 16' to be operated by angle positioning actuator or motor 17 directing proportional linkage arrangement 17'.

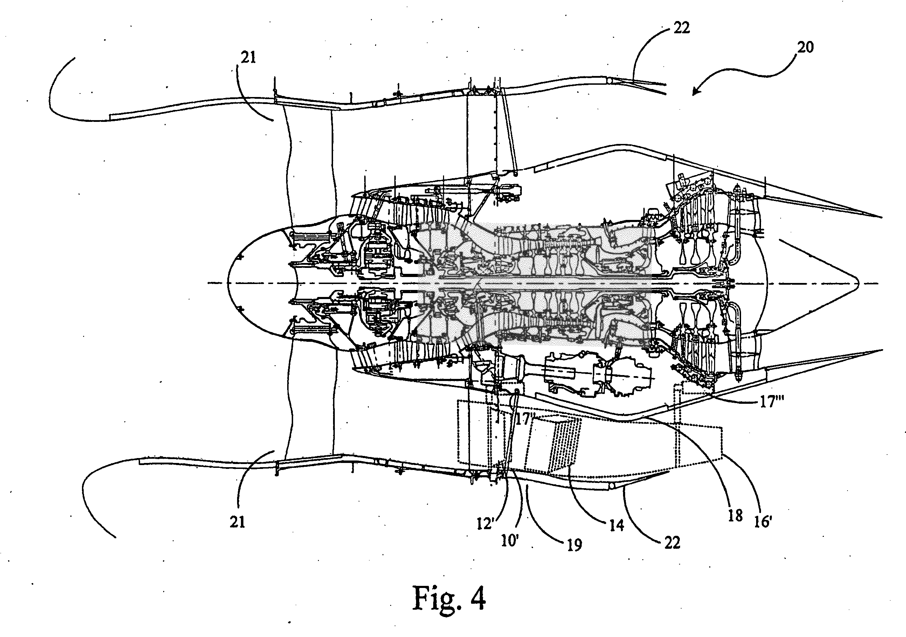

Figure 3 alternatively provides a representation of fan duct lower bifurcation structure 10 including airstream duct 11 with flaps 12' and 16' to be directly operated by angle positioning actuators or motors 17" and 17"', respectively. In contrast to Figures 2 and 3, Figure 4 shows a lengthened bifurcation structure, 10', extending past fan duct nozzle 22, and so outside of the turbofan engine fan duct into the atmosphere, and so fan duct nozzle 22 is configured to be capable of closing against, or nearly closing against, the wall of structure 10' to close, or nearly close, off the fan duct.

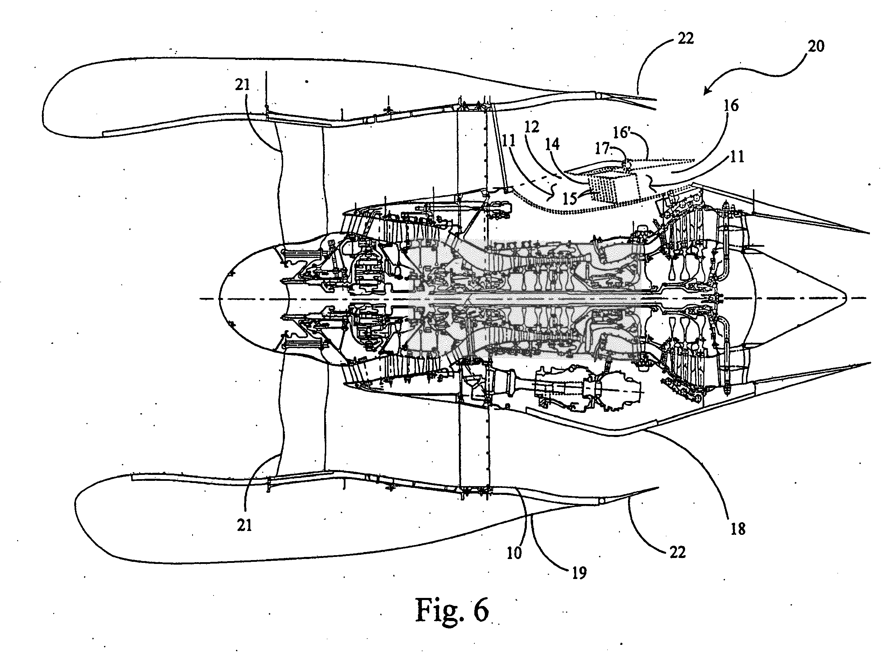

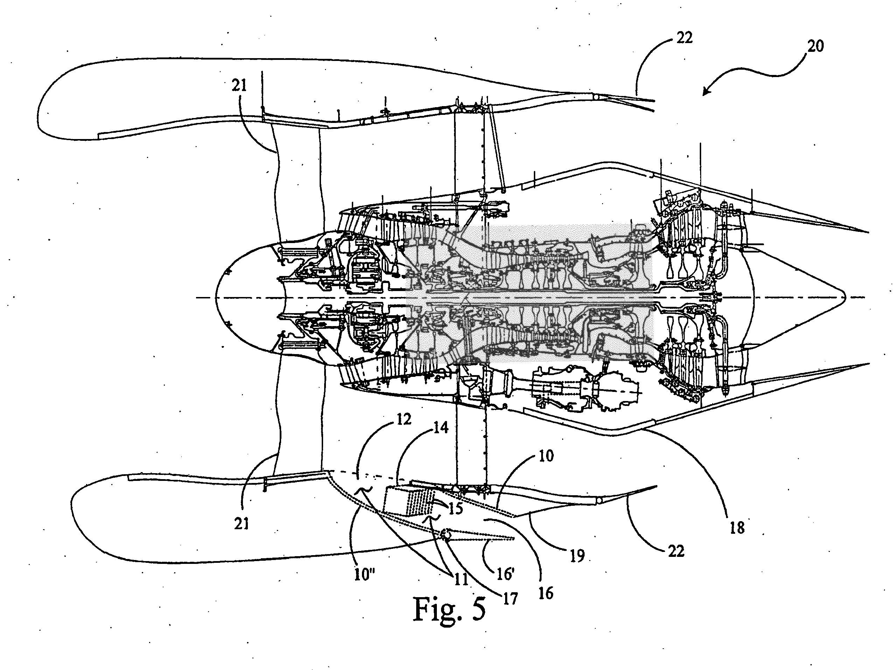

Alternative to the providing of the heat exchanger duct 11 in bifurcation structures 10 or 10', and in accordance with the invention, duct structure 11 can be provided again with its input 12 in the fan airstream but then extending either through outer cowling 18, as in Figure 5, or through engine core cowling 19 to extend through a portion of the engine compartment about which core cowling 19 is provided and back out of core cowling 19 to the atmosphere as shown in Figure 6. Outer cowling 19 is shown in full cross section in Figures 5 and 6. Ducts 11 in each of these figures are shown with exit flap 16' present and operated by angle positioning actuator or motor 17"' to control the amount of exit 16 that is open to the atmosphere during engine operation. This control of flap 16' by a suitable controller (not shown) sets the degree of cooling of the oil in tubes 15 of air and oil heat exchanger 14 and the amount of thrust recovery. Devices other than flaps can be used to selectively reduce the area of exit opening 16 such as a variable area nozzle. Also, a duct entrance opening flap, or other entrance opening selective opening area actuator, can be provided at duct opening 12 in the ducts of Figures 5 and 6. entrance opening flap, or other entrance opening selective opening area actuator, can be provided at duct opening 12 in the ducts of Figures 5 and 6.

Although the present invention has been described with reference to preferred embodiments, workers skilled in the art will recognize that changes may be made in form and detail without departing from the scope of the invention.

## Claims

1. A turbofan engine having a heat exchange system for use in lubrication systems of turbofan engine equipment in which a lubricant is utilized in providing selected operations thereof, the heat exchange system providing air and lubricant heat exchanges to cool the lubricant at selectively variable rates in fan airstreams occurring within an engine fan duct that extends between the turbofan engine fan (21) and a fan duct nozzle (22), the system comprising:
a cooling duct (11) extending through at least a portion of a stream structure that is positioned providing access to the fan airstreams occurring during use, the cooling duct (11) having an entrance opening (12) to the fan airstreams of the turbofan engine on an upstream side and an exit opening (16) on a downstream side;
a moveable entrance flap (12') disposed on the upstream side of the cooling duct (11) such that the moveable entrance flap (12') covers at least a portion of the entrance opening (12) when in a closed position and permits flow of air through the cooling duct (11) when in an open position;
a moveable exit flap (16') disposed on the downstream side of the cooling duct (11) such that the moveable exit flap (16') covers at least a portion of the exit opening (16) when in a closed position and permits flow of air through the cooling duct (11) when in an open position; and
a heat exchanger core (14) provided in the cooling duct (11) between the entrance and exit openings (12,16) thereof and having a plurality of passageway structures (15) therein about which air can pass in flowing therethrough with the passageway structures (15) being coupled to an input conduit at one end thereof and coupled to an output conduit at an opposite end thereof to enable the lubricant to be provided, and removed from, interiors of the passageway structures (15) through interiors of the input and output conduits; wherein
said stream structure is a selected one of a) a portion of an engine core cowling (18) about the engine compartment of the turbofan engine (20) with the end of the cooling duct (11) located about at or outside of the end of the fan duct nozzle (22) of the turbofan engine (20), and b) a portion of the outer cowling (19) of an engine pod of the turbofan engine (20).

2. The turbofan engine of claim 1 wherein said stream structure is a portion of an engine core cowling (18) about the engine compartment of the turbofan engine (20) with the end of the cooling duct (11) located about at or outside of the end of the fan duct nozzle (22) of the turbofan engine (20), and the cooling duct (11) extends through the engine core cowling (18) at a first location to from there extend through a portion of the engine compartment about which the engine core cowling (18) is provided and to then again extend through engine core cowling (18) at a second location.

3. The turbofan engine of claim 1 or 2 wherein the entrance flap (12') is positioned at the cooling duct entrance opening (12) and is rotatable about an axis substantially parallel to an axis intersecting opposite edges of the cooling duct exit opening (16).

4. The turbofan engine of any preceding claim wherein the exit flap (16') is positioned at the cooling duct exit opening (16) and is rotatable about an axis substantially parallel to an axis intersecting opposite edges of the cooling duct exit opening (16).

5. The turbofan engine of any preceding claim further comprising a first flap actuator (17) being connected to a mechanical linkage (17') that is also connected to both the entrance and exit flaps (12',16') so as to allow the first flap actuator (17) to force the entrance and exit flaps (12',16') to change positions.

6. The turbofan engin of claim 5 wherein the entrance flap (12') is opened by the mechanical linkage (17') to expose more cross sectional area of the entrance opening (12) than the exit flap (16') is opened by the mechanical linkage (17') to expose cross sectional area of the exit opening (16).

7. The turbofan engine of claim 5 or 6 wherein the entrance flap (12') is closed by the mechanical linkage (17') over the entrance opening (12) if the exit flap (16') is closed by the mechanical linkage (17') over the exit opening (16).

8. The turbofan engine of any preceding claim further comprising a first flap actuator (17") being connected to the entrance flap (12') so as to allow the first flap actuator (17") to force the entrance flap (12') to change positions, and further comprising a second flap actuator (17"') being connected to the exit flap (16') so as to allow the second flap actuator (17'") to force the exit flap (16') to change positions.

9. The turbofan engine of claim 8 wherein the entrance flap (12') is opened by the first flap actuator (17") to expose more cross sectional area of the entrance opening (12) than the exit flap (16') is opened by the second flap actuator (17"') to expose cross sectional area of the exit opening (16).

10. The turbofan engine of claim 8 or 9 wherein the entrance flap (12') is closed by the first flap actuator (17") over the entrance opening (12) if the exit flap (16') is closed by the second flap actuator (17"') over the exit opening (16).

11. A method for cooling lubricating oil, provided in a lubrication system for a turbofan engine (20) for lubricating moving components, at selectively variable rates in fan airstreams in a fan duct provided by the fan of the turbofan engine (20) occurring during operation of the turbofan engine (20) by using a heat exchanger (14), located in a cooling duct (11) extending through at least a portion of a stream structure that is positioned providing access to the fan airstreams occurring on the stream side of an engine fan duct wall, for providing air and lubricating oil heat exchanges to so provide air cooling of the lubricating oil, the cooling duct (11) having a duct entrance opening (12) to the fan airstreams of the turbofan engine (20) and further having a duct exit opening (16) with a moveable exit flap (16') to at least in part cover a portion of this exit opening (16), and a moveable entrance flap (12') provided at the entrance opening (12) to at least in part cover a portion of the entrance opening (12') the method comprising:
forcing lubricating oil to lubricate moving parts and to also pass through the heat exchanger (14) having a core with a plurality of passageway structures (15) therein about which air can flow with the passageway structures (15) being connected to an input conduit at one end thereof and connected to an output conduit at an opposite end thereof to enable providing the lubricating oil to, and removal from, interiors of the passageway structures (15) through interiors of the input and output conduits;
opening the exit flap (16') to uncover a selected portion of the exit opening (16); and
opening the entrance flap (12') to uncover a selected portion of the entrance opening (12) to thereby admit a portion of the fan airstream to the cooling duct (11); wherein
said stream structure is a selected one of a) a portion of an engine core cowling (18) about the engine compartment of the turbofan engine (20) with the end of the cooling duct (11) located about at or outside of the end of the fan duct nozzle (22) of the turbofan engine (20), and b) a portion of the outer cowling (19) of an engine pod of the turbofan engine (20).

12. The method of claim 11 wherein the selected portion of the exit opening (16) that is uncovered is smaller than the uncovered portion of the entrance opening (12).

13. The method of claim 11 or 12 wherein the exit opening (16) is located about at or outside the end of the fan duct nozzle.

14. The method of claim 11, 12 or 13 further comprising subsequently closing the exit flap to cover the exit opening and closing the entrance flap to cover the entrance opening.

## Patentansprüche

1. Turbofantriebwerk mit einem Wärmeaustauschsystem für den Einsatz in Schmierungssystemen einer Turbofantriebwerk-Ausrüstung, in denen ein Schmierstoff zur Bereitstellung ausgewählter Betriebsvorgänge verwendet wird, wobei das Wärmeaustauschsystem Luft und Schmierstoff-Wärmeaustauscher zur Kühlung des Schmierstoffes mit selektiv variablen Raten in Lüfterströmen bereitstellt, auftretend im Inneren eines Motorlüfterkanals, der sich zwischen dem Turbofan-Motorlüfter (21) und einer Lüfterkanaldüse (22) erstreckt, dabei umfasst das System:
einen Kühlkanal (11), der sich zumindest durch einen Abschnitt einer Stromstruktur erstreckt, welcher für den Zugang zu den Lüfterströmen während des Gebrauchs positioniert ist, wobei der Kühlkanal (11) eine Eingangsöffnung (12) zu den Lüfterströmen des Turbofantriebwerkes auf einer stromaufwärtigen Seite und eine Austrittsöffnung (16) auf einer stromabwärtigen Seite aufweist;
eine bewegliche Eingangsklappe (12'), angeordnet auf der stromaufwärtigen Seite des Kühlkanals (11), so dass die bewegliche Eingangsklappe (12') in geschlossener Position mindestens einen Abschnitt der Eintrittsöffnung (12) abdeckt, und in offener Position Luftströmung durch den Kühlkanal (11) ermöglicht;
eine bewegliche Austrittsklappe (16'), angeordnet auf der stromabwärtigen Seite des Kühlkanals (11), so dass die bewegliche Austrittsklappe (16') in geschlossener Position mindestens einen Abschnitt der Austrittsöffnung (16) abdeckt, und in offener Position Luftströmung durch den Kühlkanal (11) ermöglicht; und
einen Wärmeaustauscherkern (14), bereitgestellt im Kühlkanal (11) zwischen Eintritts- und
Austrittsöffnungen (12, 16) davon und mit einer Vielzahl von Durchgangsstrukturen (15) darin, über welche Luft eintreten kann, um dort hindurch zu strömen, wobei die Durchgangsstrukturen (15) an eine Eingangsleitung an einem Ende davon gekuppelt und an eine Ausgangsleitung an einem gegenüberliegenden Ende davon gekuppelt sind, um die Bereitstellung und
Entfernung des Schmierstoffes in den Innenräumen der Durchgangsstrukturen (15) in den Innenbereichen der Eingangs- und Ausgangsleitungen zu ermöglichen; wobei die Stromstruktur ausgewählt wird aus a) einem Abschnitt einer Triebwerkskernverkleidung (18) über dem Motorraum des Turbofantriebwerks (20), mit dem Ende des Kühlkanals (11) darüber oder außerhalb des Endes der Lüfterkanaldüse (22) des Turbofantriebwerks (20) angeordnet, und b) einem Abschnitt der äußeren Verkleidung (19) einer Gondel des Turbofantriebwerks (20).

2. Turbofantriebwerk des Anspruchs 1, wobei die Stromstruktur ein Abschnitt einer Triebwerkskernverkleidung (18) über dem Motorraum des Turbofantriebwerks (20) ist, mit dem Ende des Kühlkanals (11) darüber oder außerhalb des Endes der Lüfterkanaldüse (22) des Turbofantriebwerks (20) angeordnet, und der Kühlkanal (11) sich durch die Triebwerkskernverkleidung (18) an einer ersten Stelle erstreckt, um sich von dort durch einen Abschnitt des Motorraumes, über welchem die Triebwerkskernverkleidung (18) vorgesehen ist, und sich dann nochmal durch die Triebwerkskernverkleidung (18) an einer zweiten Stelle zu erstrecken.

3. Turbofantriebwerk des Anspruchs 1 und 2, wobei die Eingangsklappe (12') an der Kühlkanal-Eintrittsöffnung (12) angebracht ist, und drehbar um eine Achse ist, im Wesentlichen parallel zu einer Achse, welche gegenüberliegende Kanten der Kühlkanal-Austrittsöffnung (16) schneidet.

4. Turbofantriebwerk jedes vorhergehenden Anspruchs, wobei die Austrittsklappe (16') an der Kühlkanal-Austrittsöffnung (16) angebracht ist, und drehbar um eine Achse ist, im Wesentlichen parallel zu einer Achse, welche gegenüberliegende Kanten der Kühlkanal-Austrittsöffnung (16) schneidet.

5. Turbofantriebwerk jedes vorhergehenden Anspruchs, ferner einen ersten Klappen-Aktuator (17) umfassend, angeschlossen an eine mechanische Verbindung (17'), die auch angeschlossen ist an beide Eintritts- und Austrittsklappen (12', 16'), um so dem ersten Klappen-Aktuator (17) zu ermöglichen, Eintritts- und Austrittsklappen (12', 16') zu zwingen, die Positionen zu verändern.

6. Turbofantriebwerk des Anspruchs 5, wobei die Eintrittsklappe (12') mittels der mechanischen Verbindung (17') geöffnet wird, um mehr Querschnittsfläche der Eintrittsöffnung (12) freizulegen, als durch das Öffnen der Austrittsklappe (16') mittels der mechanischen Verbindung (17') Querschnittsfläche der Austrittsöffnung (16) freigelegt wird.

7. Turbofantriebwerk des Anspruchs 5 oder 6, wobei die Eintrittsklappe (12') durch die mechanische Verbindung (17') über der Eintrittsöffnung (12) geschlossen wird, wenn die Austrittsklappe (16') durch die mechanische Verbindung (17') über der Austrittsöffnung (16) geschlossen wird.

8. Turbofantriebwerk jedes vorhergehenden Anspruchs, ferner umfassend einen ersten Klappen-Aktuator (17"), der mit der Eintrittsklappe (12') verbunden ist, so dass es dem ersten Klappen-Aktuator (17 ") ermöglicht wird, die Eintrittsklappe (12') zu zwingen, die Positionen zu verändern, und ferner umfassend einen zweiten Klappen-Aktuator (17"'), der mit der Austrittsklappe (16') verbunden ist, so dass es dem zweiten Klappen Aktuator (17"') ermöglicht wird, die Austrittsklappe (16') zu zwingen, die Positionen zu verändern.

9. Turbofantriebwerk des Anspruchs 8, wobei die Eintrittsklappe (12') mittels des ersten Klappen-Aktuators (17") geöffnet wird, um mehr Querschnittsfläche der Eintrittsöffnung (12) freizulegen, als durch das Öffnen der Austrittsklappe (16') mittels des zweiten Klappen-Aktuators (17"') Querschnittsfläche der Austrittsöffnung (16) freigelegt wird.

10. Turbofantriebwerk des Anspruchs 8 oder 9, wobei die Eintrittsklappe (12') durch den ersten Klappen-Aktuator (17") über der Eintrittsöffnung (12) geschlossen wird, wenn die Austrittsklappe (16') durch den zweiten Klappen-Aktuator (17"') über der Austrittsöffnung (16) geschlossen wird.

11. Verfahren zur Kühlung von Schmieröl, vorgesehen in einem Schmierungssystem für ein Turbofantriebwerk (20) zur Schmierung beweglicher Teile, mit selektiv variablen Raten in Lüfterströmen in einem Lüfterkanal, bereitstellt durch den Fan des Turbofantriebwerks (20) während des Betriebsvorganges des Turbofantriebwerks (20) unter Einsatz eines Wärmeaustauschers (14), untergebracht in einem Kühlkanal (11), der sich durch mindestens einen Abschnitt einer Stromstruktur erstreckt, das heißt, positioniert für den Zugang zu den Lüfterströmen auf der stromaufwärtigen Seite einer Motorlüfterkanalwand, zur Bereitstellung von Luft und Schmieröl-Wärmeaustauscher, um so Luftkühlung des Schmieröls bereitzustellen, wobei der Kühlkanal (11) eine Kanaleintrittsöffnung (12) zu den Lüfterströmen des Turbofantriebwerks (20) hat und ferner eine Kanalaustrittsöffnung (16) mit einer beweglichen Austrittsklappe (16'), um zumindest teilweise einen Abschnitt dieser Austrittsöffnung (16) abzudecken, und eine bewegliche Eintrittsklappe (12'), vorgesehen an der Eintrittsöffnung (12), um zumindest teilweise einen Abschnitt der Eintrittsöffnung (12') abzudecken, wobei das Verfahren umfasst:
Erzwingung, dass das Schmieröl die beweglichen Teile schmiert und auch durch den Wärmeaustauscher (14) durchläuft, der einen Kern mit einer Vielzahl von Durchgangsstrukturen (15), über welche Luft strömen kann, darin hat, wobei die Durchgangsstrukturen (15) an eine Eingangsleitung an einem Ende davon gekuppelt und an eine Ausgangsleitung an einem gegenüberliegenden Ende davon gekuppelt sind, um die Bereitstellung und Entfernung des Schmieröls in den Innenräumen der Durchgangsstrukturen (15) in den Innenbereichen der Eingangs- und Ausgangsleitungen zu ermöglichen;
Öffnung der Austrittsklappe (16'), um einen ausgewählten Abschnitt der Austrittsöffnung (16) freizugeben; und
Öffnung der Eintrittsklappe (12'), um einen ausgewählten Abschnitt der Eintrittsöffnung (12) freizugeben, um dadurch einen Teil des Lüfterstroms zum Kühlkanal (11) hereinzulassen; wobei die Stromstruktur ausgewählt wird aus a) einem Abschnitt der Triebwerkskernverkleidung (18) über dem Motorraum des Turbofantriebwerks (20), mit dem Ende des Kühlkanals (11) darüber oder außerhalb des Endes der Lüfterkanaldüse (22) des Turbofantriebwerks (20) angeordnet, und b) einem Abschnitt der äußeren Verkleidung (19) einer Gondel des Turbofantriebwerks (20).

12. Verfahren des Anspruchs 11, wobei der ausgewählte Abschnitt der Austrittsöffnung (16), der freigelegt wird, kleiner als der freigelegte Abschnitt der Eintrittsöffnung (12) ist.

13. Verfahren des Anspruchs 11 oder 12, wobei die Austrittsöffnung (16) darüber oder außerhalb des Endes der Lüfterkanaldüse angeordnet ist.

14. Verfahren des Anspruchs 11, 12 oder 13 ferner umfassend im Wesentlichen das Schließen der Austrittsklappe, um die Austrittsöffnung abzudecken und das Schließen der Eintrittsklappe, um die Eintrittsöffnung abzudecken.

## Revendications

1. Turboréacteur à double flux doté d'un système d'échange de chaleur destiné à être utilisé dans des systèmes de lubrification d'un équipement de turboréacteur à double flux dans lequel un lubrifiant est utilisé pour assurer des fonctionnements sélectionnés de celui-ci, le système d'échange de chaleur assurant des échanges de chaleur d'air et de lubrifiant pour refroidir le lubrifiant à des cadences sélectivement variables dans des filets d'air de soufflante se produisant au sein d'une canalisation de soufflante de réacteur qui s'étend entre la soufflante de turboréacteur à double flux (21) et une buse de canalisation de soufflante (22), le système comprenant :
une canalisation de refroidissement (11) s'étendant à travers au moins une portion d'une structure de filet qui est positionnée fournissant un accès aux filets d'air de soufflante se produisant en cours d'utilisation, la canalisation de refroidissement (11) ayant une ouverture d'admission (12) sur les filets d'air de soufflante du turboréacteur à double flux d'un côté amont et une ouverture d'évacuation (16) d'un côté aval ;
un volet d'admission mobile (12') disposé du côté amont de la canalisation de refroidissement (11) de sorte que le volet d'admission mobile (12') recouvre au moins une portion de l'ouverture d'admission (12) lorsqu'il est dans une position fermée et permette un écoulement d'air à travers la canalisation de refroidissement (11) lorsqu'il est dans une position ouverte ;
un volet d'évacuation mobile (16') disposé sur le côté aval de la canalisation de refroidissement (11) de sorte que le volet d'évacuation mobile (16') recouvre au moins une portion de l'ouverture d'évacuation (16) lorsqu'il est dans une position fermée et permette un écoulement d'air à travers la canalisation de refroidissement (11) lorsqu'il est dans une position ouverte ; et
un faisceau d'échangeur de chaleur (14) prévu dans la canalisation de refroidissement (11) entre ses ouvertures d'admission et d'évacuation (12, 16) et ayant une pluralité de structures de voie de passage (15) à l'intérieur autour desquelles l'air peut passer en s'y écoulant, les structures de voie de passage (15) étant couplées à une conduite d'entrée au niveau d'une extrémité de celui-ci et couplées à une conduite de sortie au niveau d'une extrémité opposée de celui-ci pour permettre la fourniture et le retrait du lubrifiant dans et des intérieurs des structures de voie de passage (15) à travers des intérieurs des conduites d'entrée et de sortie ; dans lequel
ladite structure de filet est choisie parmi (a) une portion d'un capot bloc réacteur (18) autour du compartiment réacteur du turboréacteur à double flux (20) avec l'extrémité de la canalisation de refroidissement (11) située autour ou à l'extérieur de l'extrémité de la buse de canalisation de soufflante (22) du turboréacteur à double flux (20), et b) une portion du capot extérieur (19) d'un fuseau réacteur du turboréacteur à double flux (20).

2. Turboréacteur à double flux selon la revendication 1, dans lequel ladite structure de filet est une portion d'un capot bloc réacteur (18) autour du compartiment réacteur du turboréacteur à double flux (20) avec l'extrémité de la canalisation de refroidissement (11) située autour ou à l'extérieur de l'extrémité de la buse de canalisation de soufflante (22) du turboréacteur à double flux (20), et la canalisation de refroidissement (11) s'étend à travers le capot bloc réacteur (18) à un premier emplacement pour s'étendre à partir de celui-ci à travers une portion du compartiment réacteur autour duquel le capot bloc réacteur (18) est prévu puis pour s'étendre à nouveau à travers le capot bloc réacteur (18) à un second emplacement.

3. Turboréacteur à double flux selon la revendication 1 ou 2, dans lequel le volet d'admission (12') est positionné au niveau de l'ouverture d'admission de canalisation de refroidissement (12) et peut être mis en rotation rotatif autour d'un axe sensiblement parallèle à un axe coupant des bords opposés de l'ouverture d'évacuation de canalisation de refroidissement (16).

4. Turboréacteur à double flux selon l'une quelconque des revendications précédentes, dans lequel le volet d'évacuation (16') est positionné au niveau de l'ouverture d'évacuation de canalisation de refroidissement (16) et peut être mis en rotation autour d'un axe sensiblement parallèle à un axe coupant des bords opposés de l'ouverture d'évacuation de canalisation de refroidissement (16).

5. Turboréacteur à double flux selon l'une quelconque des revendications précédentes, comprenant en outre un premier actionneur de volet (17) raccordé à une timonerie mécanique (17') qui est également raccordée à la fois aux volets d'admission et d'évacuation (12', 16') de façon à permettre au premier actionneur de volet (17) de forcer les volets d'admission et d'évacuation (12', 16') à changer de positions.

6. Turboréacteur à double flux selon la revendication 5, dans lequel le volet d'admission (12') est ouvert par la timonerie mécanique (17') pour exposer davantage d'aire en coupe de l'ouverture d'admission (12) que le volet d'évacuation (16') qui est ouvert par la timonerie mécanique (17') pour exposer une aire en coupe de l' ouverture d'évacuation (16).

7. Turboréacteur à double flux selon la revendication 5 ou 6, dans lequel le volet d'admission (12') est fermé par la timonerie mécanique (17') sur l'ouverture d'admission (12) si le volet d'évacuation (16') est fermé par la timonerie mécanique (17') sur l'ouverture d'évacuation (16).

8. Turboréacteur à double flux selon l'une quelconque des revendications précédentes, comprenant en outre un premier actionneur de volet (17") raccordé au volet d'admission (12') de façon à permettre au premier actionneur de volet (17") de forcer le volet d'admission (12') à changer de positions, et comprenant en outre un second actionneur de volet (17"') raccordé au volet d'évacuation (16') de façon à permettre au second actionneur de volet (17"') de forcer le volet d'évacuation (16') à changer de positions.

9. Turboréacteur à double flux selon la revendication 8, dans lequel le volet d'admission (12') est ouvert par le premier actionneur de volet (17") pour exposer davantage d'aire en coupe de l'ouverture d'admission (12) que le volet d'évacuation (16') qui est ouvert par le second actionneur de volet (17"') pour exposer davantage d'aire en coupe de l'ouverture d'évacuation (16).

10. Turboréacteur à double flux selon la revendication 8 ou 9, dans lequel le volet d'admission (12') est fermé par le premier actionneur de volet (17") sur l'ouverture d'admission (12) si le volet d'évacuation (16') est fermé par le second actionneur de volet (17"') sur l'ouverture d'évacuation (16).

11. Procédé de refroidissement d'huile lubrifiante, prévu dans un système de lubrification d'un turboréacteur à double flux (20) permettant de lubrifier des composants mobiles, à des cadences sélectivement variables de filets d'air de soufflante dans une canalisation de soufflante fournie par la soufflante du turboréacteur à double flux (20) se produisant en cours de fonctionnement du turboréacteur à double flux (20) en utilisant un échangeur de chaleur (14), situé dans une canalisation de refroidissement (11) s'étendant à travers au moins une portion d'une structure de filet qui est positionnée en donnant accès aux filets d'air de soufflante se produisant du côté de filet d'une paroi de canalisation de soufflante de réacteur, pour assurer des échanges de chaleur d'air et d'huile lubrifiante de façon à assurer un refroidissement à l'air de l'huile lubrifiante, la canalisation de refroidissement (11) ayant une ouverture d'admission de canalisation (12) sur les filets d'air de soufflante du turboréacteur à double flux (20) et ayant en outre une ouverture d'évacuation de canalisation (16) avec un volet d'évacuation mobile (16') pour couvrir au moins en partie une portion de cette ouverture d'évacuation (16), et un volet d'admission mobile (12') prévu au niveau de l'ouverture d'admission (12) pour couvrir au moins en partie une portion de l'ouverture d'admission (12'), le procédé comprenant :
le fait de forcer l'huile lubrifiante à lubrifier des parties mobiles et également à passer à travers l'échangeur de chaleur (14) ayant un faisceau avec une pluralité de structures de voie de passage (15) à l'intérieur autour desquelles l'air peut s'écouler, les structures de voie de passage (15) étant raccordées à une conduite d'entrée à une extrémité de celui-ci et raccordées à une conduite de sortie à une extrémité opposée de celui-ci pour permettre la fourniture et le retrait de l'huile lubrifiante dans et des intérieurs des structures de voie de passage (15) à travers des intérieurs des conduites d'entrée et de sortie ;
l'ouverture du volet d'évacuation (16') pour découvrir une portion sélectionnée de l'ouverture d'évacuation (16) ; et
l'ouverture du volet d'admission (12') pour découvrir une portion sélectionnée de l'ouverture d'admission (12) afin d'admettre ainsi une portion du filet d'air de soufflante dans la canalisation de refroidissement (11) ; dans lequel
ladite structure de filet est sélectionnée parmi : a) une portion d'un capot bloc réacteur (18) autour du compartiment réacteur du turboréacteur à double flux (20) avec l'extrémité de la canalisation de refroidissement (11) située autour ou à l'extérieur de l'extrémité de la buse de canalisation de soufflante (22) du turboréacteur à double flux (20), et b) une portion du capot extérieur (19) d'un fuseau réacteur du turboréacteur à double flux (20).

12. Procédé selon la revendication 11, dans lequel la portion sélectionnée de l'ouverture d'évacuation (16) qui est découverte est plus petite que la portion découverte de l'ouverture d'admission (12).

13. Procédé selon la revendication 11 ou 12, dans lequel l'ouverture d'évacuation (16) est située autour ou à l'extérieur de l'extrémité de la buse de canalisation de soufflante.

14. Procédé selon la revendication 11, 12 ou 13, comprenant en outre la fermeture ultérieure du volet d'évacuation pour couvrir l'ouverture d'évacuation et la fermeture du volet d'admission pour couvrir l'ouverture d'admission.
